# EUROPEAN PATENT APPLICATION

(11) **EP 4 521 803 A1**
(43) Date of publication of application: **12.03.2025**
(21) Application number: 23799307.6
(22) Date of filing: 06.05.2023
(51) Int. Cl.: H04W 24/02

(54) **COMMUNICATION METHOD AND APPARATUS, AND NETWORK FUNCTION AND STORAGE MEDIUM**

(30) Priority: 06.05.2022 CN 202210488026
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: SUN, Tao, Beijing 100032 (CN); WANG, Xiaoyun, Beijing 100032 (CN); DUAN, Xiaodong, Beijing 100032 (CN); LU, Lu, Beijing 100032 (CN); HAN, Yan, Beijing 100032 (CN); LIU, Chao, Beijing 100032 (CN); WANG, Dan, Beijing 100032 (CN)
(74) Representative: Maiwald GmbH
(86) International application number: PCT/CN2023/092466
(87) International publication number: WO 2023/213321

(57) **Abstract**

Disclosed in the embodiments of the present disclosure are a communication method and apparatus, and a network function and a storage medium. The method comprises: receiving, by a user plane function (UPF), a first message sent by a first network function, wherein the first message is configured to request an update or deletion of a subscription to an information open service.

## Description

### CROSS REFERENCE TO RELATED APPLICATIONS

This application claims priority to Chinese patent application No. 202210488026.X, filed on May 06, 2022, the entire contents of which are incorporated herein by reference.

### TECHNICAL FIELD

The disclosure relates to a field of communication technology, in particular to a communication method, a communication apparatus, a network function and a storage medium.

### BACKGROUND

A lot of data in a user plane function (UPF) is relatively sensitive and may involve the privacy of users and networks, and belongs to the core asset of operators. The UPF can expose the data to other Network Functions (NFs). During the UPF capability exposing process, there is currently no effective solution for how to update/delete a UPF exposure service authorized to other NFs.

### SUMMARY

To address related existing technical problems, embodiments of the disclosure provide a communication method, a communication apparatus, a network function and a storage medium.

To achieve the above objectives, the technical solutions of the embodiments of the disclosure are implemented as follows.

According to a first aspect of embodiments of the disclosure, a communication method is provided. The method includes: receiving, by a user plane function (UPF), a first message sent by a first network function, in which the first message is configured to request an update or deletion of a subscription to an information exposure service.

In the above solution, the information exposure service is a service that the UPF exposes information to the first network function.

In the above solution, receiving, by a user plane function (UPF), a first message sent by a first network function, includes: directly receiving, by the UPF, the first message sent by the first network function, in which the first message includes a subscription-related identifier (ID) of the first network function and/or an ID of the UPF; or, receiving, by the UPF, the first message sent by the first network function via other network functions, in which the first message includes the subscription-related ID of the first network function and/or the ID of the UPF.

In the above solution, the first message includes first information for which exposure is requested to be updated or deleted.

In the above solution, the method further includes: sending, by the UPF, a second message to the first network function, in which the second message includes at least one of: an indication of successful update or deletion; an indication of failed update or deletion and/or a reason value; or second information for which exposure is updated or deleted.

In the above solution, the method further includes: sending, by the UPF, a third message to a second network function; in which the third message is configured to notify that the subscription to the information exposure service has been updated or deleted, and/or, the third message includes at least one of: an identification information of the first network function, or the second information.

In the above solution, the method further includes: sending, by the UPF, a fourth message to a second network function; in which the fourth message is configured to request authorization to update or delete an information exposure service, and/or, the fourth message includes at least one of: an ID of the first network function, or first information for which exposure is requested to be updated or deleted.

In the above solution, the method further includes: receiving, by the UPF, a fifth message sent by the second network function, in which the fifth message includes at least one of: an indication of successful update or deletion; an indication of failed update or deletion and/or a reason value; or determined second information for which exposure is updated or deleted.

According to a second aspect of embodiments of the disclosure, a communication method is provided. The method includes: sending, by a first network function, a first message to a UPF, in which the first message is configured to request an update or deletion of a subscription to an information exposure service.

In the above solution, the information exposure service is a service that the UPF exposes information to the first network function.

In the above solution, sending, by the first network function, the first message to the UPF, includes: directly sending, by the first network function, the first message to the UPF, in which the first message includes a subscription-related ID of the first network function and/or an ID of the UPF; or, sending, by the first network function, the first message via other network functions, in which the first message includes the subscription-related ID of the first network function and/or the ID of the UPF.

In the above solution, the first message includes first information for which exposure is requested to be updated or deleted.

In the above solution, the method further includes: receiving, by the first network function, a second message sent by the UPF, in which the second message includes at least one of: an indication of successful update or deletion; an indication of failed update or deletion and/or a reason value; or second information for which exposure is updated or deleted.

According to a third aspect of embodiments of the disclosure, a communication method is provided. The method includes: receiving, by a second network function, a fourth message sent by a UPF, in which the fourth message is configured to request authorization to update or delete an information exposure service, and/or, determining, by the second network function, a result of updating or deleting the information exposure service based on the fourth message.

In the above solution, the information exposure service is a service that the UPF exposes information to a first network function.

In the above solution, the fourth message includes at least one of: an ID of a first network function, or first information for which exposure is requested to be updated or deleted.

In the above solution, the method further includes: sending, by the second network function, a fifth message to the UPF, in which the fifth message includes at least one of: an indication of successful update or deletion; an indication of failed update or deletion and/or a reason value; or second information for which exposure is updated or deleted.

According to a fourth aspect of embodiments of the disclosure, a communication method is provided. The method includes: determining, by a second network function, a result of updating or deleting an information exposure service; and sending a sixth message to a UPF, in which the sixth message is configured to notify the result of updating or deleting the information exposure service.

In the above solution, the information exposure service is a service that the UPF exposes information to a first network function.

In the above solution, in which sending the sixth message to the UPF, includes: directly sending, by the second network function, the sixth message to the UPF; or sending, by the second network function, the sixth message to the UPF via other network functions.

In the above solution, the sixth message includes at least one of: an indication of successful update or deletion; an ID of the UPF; an ID of a first network function; or second information for which exposure is updated or deleted.

In the above solution, the method further includes: receiving, by the second network function, a seventh message sent by a first network function, in which the seventh message is used to request authorization to update or delete an information exposure service; and/or the seventh message includes at least one of: an ID of the UPF, an ID of the first network function, or first information for which exposure is requested to be updated or deleted.

In the above solution, the method further includes: sending, by the second network function, an eighth message to the first network function, in which the eighth message is used to respond to the result of updating or deleting the information exposure service.

In the above solution, the eighth message includes at least one of: an indication of successful update or deletion; an indication of failed update or deletion and/or a reason value; or second information for which exposure is updated or deleted.

According to a fifth aspect of embodiments of the disclosure, a communication method is provided. The method includes: receiving, by a UPF, a sixth message sent by a second network function, in which the sixth message is configured to notify a result of updating or deleting an information exposure service.

In the above solution, the information exposure service is a service that the UPF exposes information to a first network function.

In the above solution, receiving, by the UPF, the sixth message sent by the second network function, includes: directly receiving, by the UPF, the sixth message sent by the second network function; or receiving, by the UPF, the sixth message sent by the second network function via other network functions.

In the above solution, the sixth message includes at least one of: an indication of successful update or deletion; an ID of the UPF; an ID of a first network function; or second information for which exposure is updated or deleted.

In the above solution, the method further includes: sending, by the UPF, a ninth message to a first network function, in which the ninth message includes at least one of: an indication of successful update or deletion; an indication of failed update or deletion and/or a reason value; or second information for which exposure is updated or deleted.

In the above solution, sending, by the UPF, the ninth message to the first network function, includes: directly sending, by the UPF, the ninth message to the first network function; or sending, by the UPF, the ninth message to the first network function via other network functions.

According to a sixth aspect of embodiments of the disclosure, a communication method is provided. The method includes: sending, by a first network function, a seventh message to a second network function, in which the seventh message is used to request authorization to update or delete an information exposure service.

In the above solution, the information exposure service is a service that the UPF exposes information to the first network function.

In the above solution, the seventh message includes at least one of: an ID of a UPF, an ID of the first network function, or first information for which exposure is requested to be updated or deleted.

In the above solution, the method further includes: receiving, by the first network function, an eighth message sent by the second network function, in which the eighth message includes at least one of: an indication of successful update or deletion; an indication of failed update or deletion and/or a reason value; or second information for which exposure is updated or deleted.

In the above solution, the method further includes: receiving, by the first network function, a ninth message sent by a UPF, in which the ninth message is used to notify a result of updating or deleting an information exposure service, and the ninth message includes at least one of: an indication of successful update or deletion; an indication of failed update or deletion and/or a reason value; or second information for which exposure is updated or deleted.

In the above solution, receiving, by the first network function, the ninth message sent by the UPF, includes: directly receiving, by the first network function, the ninth message sent by the UPF; or receiving, by the first network function, the ninth message sent by the UPF via other network functions.

According to a seventh aspect of embodiments of the disclosure, a communication apparatus is provided. The communication apparatus includes: a first receiving unit configured to receive a first message sent by a first network function, in which the first message is used to request an update or deletion of a subscription to an information exposure service.

According to an eighth aspect of embodiments of the disclosure, a communication apparatus is provided. The communication apparatus includes: a second sending unit configured to send a first message to a UPF, in which the first message is used to request an update or deletion of a subscription to an information exposure service.

According to a ninth aspect of embodiments of the disclosure, a communication apparatus is provided. The communication apparatus includes: a third receiving unit and/or a first processing unit; in which the third receiving unit is configured to receive a fourth message sent by a UPF, in which the fourth message is used to request an authorization to update or delete an information exposure service; the first processing unit is configured to determine a result of updating or deleting the information exposure service based on the fourth message.

According to a tenth aspect of embodiments of the disclosure, a communication apparatus is provided. The communication apparatus includes: a second processing unit and a fourth sending unit; in which the second processing unit is configured to determine a result of updating or deleting an information exposure service; the fourth sending unit is configured to send a sixth message to a UPF, in which the sixth message is used to notify the result of updating or deleting the information exposure service.

According to a seventh aspect of embodiments of the disclosure, a communication apparatus is provided. The communication apparatus includes: a fifth receiving unit configured to receive a sixth message sent by a second network function, in which the sixth message is used to notify a result of updating or deleting an information exposure service.

According to a twelfth aspect of embodiments of the disclosure, a communication apparatus is provided. The communication apparatus includes: a sixth sending unit configured to send a seventh message to a second network function, in which the seventh message is used to request an authorization to update or delete an information exposure service.

According to a thirteenth aspect of embodiments of the disclosure, a computer-readable storage medium having a computer program stored thereon is provided. When the computer program is executed by a processor, the steps of the communication method described in the first, second, third, fourth, fifth or sixth aspect of embodiments of the disclosure are implemented.

According to a fourteenth aspect of embodiments of the disclosure, a network function is provided. The network function includes: a memory, a processor and a computer program stored on the memory and executable by the processor. When the computer program is executed by the processor, the steps of the communication method described in the first, second, third, fourth, fifth or sixth aspect of embodiments of the disclosure are implemented.

According to a communication method, a communication apparatus, a network function and a storage medium provided by embodiments of the disclosure, in one case, a UPF receives a first message sent by a first network function, in which the first message is used to request to update or delete a subscription to an information exposure service. In another case, a second network function determines a result of updating or deleting an information exposure service and sends a sixth message to the UPF. The sixth message is used to notify the result of updating or deleting the information exposure service. By adopting the technical solutions of the embodiments of the disclosure, requests for triggering UPF's update or deletion behavior for information exposure services through the first network function, or requests an update or deletion of the information exposure service is determined by the second network function, which realizes the update/deletion of the information exposure service of UPF during the UPF capability exposing process, thereby effectively improving the security and flexibility of the exposing capability of UPF.

### BRIEF DESCRIPTION OF THE DRAWINGS

FIG. 1 is a schematic diagram of a 5G network architecture.
FIG. 2 is a first flowchart of a communication method of an embodiment of the disclosure.
FIG. 3 is a second flowchart of a communication method of an embodiment of the disclosure.
FIG. 4 is a third flowchart of a communication method of an embodiment of the disclosure.
FIG. 5 is a first interaction schematic diagram of a communication method of an embodiment of the disclosure.
FIG. 6 is a second interaction schematic diagram of a communication method of an embodiment of the disclosure.
FIG. 7 is a fourth flowchart of a communication method of an embodiment of the disclosure.
FIG. 8 is a fifth flowchart of a communication method of an embodiment of the disclosure.
FIG. 9 is a sixth flowchart of a communication method of an embodiment of the disclosure.
FIG. 10 is a third interaction schematic diagram of a communication method of an embodiment of the disclosure.
FIG. 11 is a fourth interaction schematic diagram of a communication method of an embodiment of the disclosure.
FIG. 12 is a first schematic diagram of a compositional structure of a communication apparatus of an embodiment of the disclosure.
FIG. 13 is a second schematic diagram of a compositional structure of a communication apparatus of an embodiment of the disclosure.
FIG. 14 is a third schematic diagram of a compositional structure of a communication apparatus of an embodiment of the disclosure.
FIG. 15 is a fourth schematic diagram of a compositional structure of a communication apparatus of an embodiment of the disclosure.
FIG. 16 is a fifth schematic diagram of a compositional structure of a communication apparatus of an embodiment of the disclosure.
FIG. 17 is a sixth schematic diagram of a compositional structure of a communication apparatus of an embodiment of the disclosure.
FIG. 18 is a schematic diagram of a compositional structure of hardware structure of a network function of an embodiment of the disclosure.

### DETAILED DESCRIPTION

The disclosure is described in further detail below in combination with the accompanying drawings and specific embodiments.

The technical solutions of embodiments of the disclosure may be applied to various communication systems, such as a Global System of Mobile communication (GSM) system, a Long Term Evolution (LTE) system, or the 5th-Generation (5G) system, etc. Optionally, the 5G system or 5G network may also be referred to as a New Radio (NR) system or a NR network.

For example, the communication system applied in the embodiments of the disclosure may include a network device and a terminal device (which may also be referred to as a terminal, a communication terminal, and the like). The network device may be a device in communication with the terminal device. The network device may provide communication coverage within a certain area and communicate with terminals located within the area. Optionally, the network device may be a base station in various communication systems, such as an Evolutional Node B (eNB) in the LTE system, and a base station (gNB) in the 5G system or the NR system.

It should be understood that devices with communication functions in the network/system in the embodiments of the disclosure may be referred to as communication devices. The communication devices may include network devices and terminals with communication functions. The network devices and terminals may be the specific devices as described above, which will not be repeated herein. The communication devices may also include other devices in the communication system, such as network controllers, mobility management entities, and other network entities, which are not limited in the embodiments of the disclosure.

It should be understood that the terms "system" and "network" are often used interchangeably herein. The term "and/or" in this specification is merely a description of the association relationship of associated objects, and indicates three existing relationships. For example, "A and/or B" indicates three situations, namely, A exists alone, A and B both exist, and B exists alone. In addition, the character "/" in this specification generally indicates that the associated objects before and after the character "/" are in an "or" relationship.

The terms "first", "second" and the like in the specification and claims of the disclosure are used to distinguish similar objects but not necessarily to describe any particular sequence or order. It is understood that the terms so used are interchangeable under appropriate circumstances, such that the embodiments of the disclosure described herein are, for example, capable of practice in sequences other than those illustrated or described herein. In addition, the terms "comprise" and "has" and any variations thereof, are intended to cover non-exclusive inclusions. For example, a process, method, system, product, or apparatus that includes a series of steps or elements is not necessarily limited to those steps or elements explicitly listed, but may include other steps or elements not explicitly listed or inherent to such process, method, product, or apparatus.

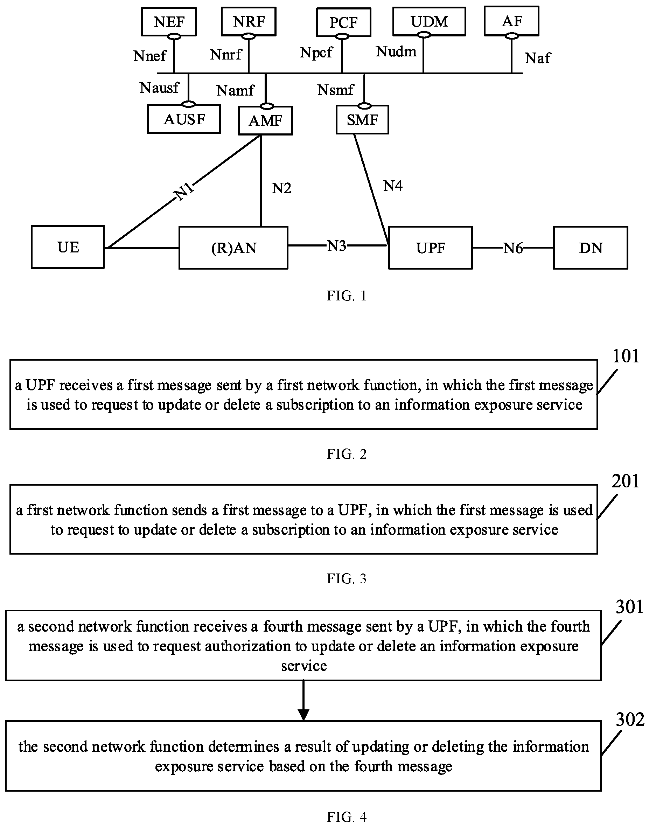

Before the technical solutions of the embodiments of the disclosure are described in detail, the 5G network architecture is first briefly described. As illustrated in FIG. 1, the core network of the 5G network adopts a service based architecture, and a service based interface (SBI) is used between network functions. The functions of each network function are briefly described below.

Unified Data Management (UDM): subscription information management; user authentication. Authentication Server Function (AUSF): authentication vector generation.

Policy Control Function (PCF): application and service data flow detection; Quality of Service (QoS) control; rate management; flow-based billing; background data transfer policy negotiation; management of Packet Flow

Description (PFD) configured from a third-party application server (AS) through Network Exposure Function (NEF) and Packet Flow Description Function (PFDF); data flow diversion management (different data networks (DNs)); unified data repository (UDR) front-end function to provide user subscription information; provide policies related to network selection and mobility management(such as RAT/Frequency Selection Priority (RFSP) retrieval, in which RAT is the abbreviation of Radio Access Technology; configuration of user equipment (UE) policies (the network side shall support providing policy information to the UE, such as, network discovery and selection policy, Session and Service Continuity (SSC) mode selection policy, and network slice selection policy.

Access and Mobility Management Function (AMF): NG2 interface termination; NG1 interface termination; mobility management; routing of session management (SM) messages; access authentication; Security Anchor (SEA); Security Context Management (SCM).

Session Management Function (SMF): SM; User Plane Function (UPF) selection and control; SM Non-Access Stratum (NAS) message termination; downlink data notification.

UPF: anchor point for Intra-RAT mobility; data message routing and forwarding; QoS processing of data messages; data message detection and QoS policy enforcement; traffic statistics and reporting.

Network Exposure Function (NEF): collection, analysis and reorganization of network capabilities; exposure of network capabilities.

Network Repository Function (NRF): service discovery, reception of NF discovery requests from NF instances, and providing discovered information about NF instances to NF instances.

### Application Function (AF).

### (Radio) Access Network ((R)AN).

It should be noted that Nnef, Nnrf, Npcf, Nudm, Naf, Nausf, Namf, Nsmf, N1, N2, N3, N4, and N6 in FIG. 1 are sequence numbers of interfaces. The meanings of these sequence numbers can be found in the definitions in the standard protocols and are not limited here.

In the above architecture, the control plane network elements use the service based architecture, while the control plane and the user plane are not service-based. Therefore, a solution for service-based UPF is proposed, such as increasing capacity in the following:
1. avoiding repeated data transmission and reducing transmission paths
   Example 1, consider whether a PCF service can directly subscribe/unsubscribe to a UPF service to obtain a QoS monitoring report (end-to-end delay).
2. retrieving original state or real-time service flow information from UPF
   Example 2, Network Data Analytics Function (NWDAF) service can subscribe/unsubscribe to the UPF to retrieve real-time service flow information, for example, considering the effective sampling intervals of different services to facilitate data collection and analysis.
3. UPF incident exposure
   Example 3, a 5G Internet of Things (IoT) network needs to connect the UPF to the NEF/local NEF to expose network information to the AS.

The following embodiments of the disclosure are presented based on at least the network architecture described above.

The embodiment of the disclosure provides a communication method. FIG. 2 is a first flowchart of a communication method of an embodiment of the disclosure. As illustrated in FIG. 2, the method includes the following steps.

At step 101, a UPF receives a first message sent by a first network function, in which the first message is used to request an update or deletion of a subscription to an information exposure service.

In this embodiment, the first message is configured to request an update or deletion of a subscription to an information exposure service. For example, the first message (or a subscription to request an update or deletion of the information exposure service) may be an unsubscribe request, a subscription updating request, a modify subscription request, a de-authorization request, an authorization update request, a de-authentication request, an authentication update request, an authorization subscription update request, an access authorization update request, an authorization delete request, a subscription releasing request, etc. This embodiment does not limit the name or type of the first message as long as it can achieve its function.

In the embodiment, optionally, the information exposure service is a service that the UPF exposes information to the first network function.

In this embodiment, after receiving the first message, the UPF updates or deletes the information exposure service subscribed by the first network function. As an example, the UPF may update exposure of information to the first network function or may stop exposure of the information to the first network function.

In each embodiment of the disclosure, the first network function may be a network function such as an AF, a PCF, a Network Data Analytics Function (NWDAF), a NEF, or a CHarging Function (CHF). Certainly, the type of the first network function in the embodiments of the disclosure is not limited to the above examples, and other network functions that require the information exposure service of the UPF are within the protection scope of the embodiments of the disclosure.

In some optional embodiments, receiving, by the UPF, the first message sent by the first network function, includes: directly receiving by the UPF the first message sent by the first network function, in which the first message includes a subscription-related identifier (ID) of the first network function and/or an ID of the UPF; or, receiving by the UPF the first message sent by the first network function via other network functions, in which the first message includes the subscription-related ID of the first network function and/or the ID of the UPF.

In this embodiment, as an implementation, the UPF and the first network function can directly interact with each other, i.e. the UPF directly receives the first message sent by the first network function. As another implementation, the UPF and the first network function need to interact with each other via other network functions (one or more other network functions).

The first message includes the subscription-related ID of the first network function and/or the ID of the UPF. Optionally, the ID of the UPF may be, for example, an Internet Protocol (IP) address and/or a fully qualified domain name (FQDN) of the UPF.

In some optional embodiments, the first message includes first information for which exposure is requested to be updated or deleted.

In this embodiment, the first message may include first information. The first information represents the content for which exposure is requested to be updated or deleted, i.e. the exposure of what information is requested by the first network function to be updated or deleted. For example, the first information may include at least one of the following information: a QoS monitoring report; a QoS parameter, such as a 5G QoS ID (5QI), a packet delay, a packet loss rate, a data flow bit rate (e.g., a Guaranteed Flow Bit Rate (GFBR), a Maximum Flow Bit Rate (MFBR)), a packet rate, and a usage report; real-time service flow information, for example, the effective sampling intervals of different services are taken into account to facilitate data collection and analysis; IoT device related information; billing information; or UPF load information.

In some possible embodiments of the disclosure, the method further includes: sending by the UPF a second message to the first network function, in which the second message includes at least one of: an indication of successful update or deletion; an indication of failed update or deletion and/or a reason value; or second information for which exposure is updated or deleted.

In this embodiment, the UPF may send an indication of successful update or deletion, or an indication of failed update or deletion and/or a reason value to the first network function via the second message. Optionally, the UPF may, in addition to sending the above-mentioned indication to the first network function through the second message, also send an indication (i.e., the second information) for indicating information for which the exposure is updated or deleted. The second information is part or all of the first information.

In some possible embodiments of the disclosure, the method further includes: sending by the UPF a third message to a second network function, in which the third message is used to notify that a subscription to an information exposure service has been updated or deleted, and/or, the third message includes at least one of: an ID of the first network function, or the first information.

In this embodiment, the UPF autonomously determines to update or delete the information exposure service subscribed by the first network function, i.e., determines to update or delete the content of the above-mentioned first information according to the content carried by the first message. The UPF further sends the third message to the second network function to notify that the subscription to the information exposure service has been updated or deleted.

In this embodiment, the ID information of the first network function may include at least one of: a name of the first network function, a type of the first network function, an IP address of the first network function and an FQDN.

In each embodiment of the disclosure, the second network function may be, for example, a PCF, a NEF, a SMF, etc. Certainly, the type of the second network function in the embodiments of the disclosure is not limited to the above examples, and other network functions with the above functions may also be within the protection scope of the embodiments of the disclosure.

In some optional embodiments, the method further includes: sending by the UPF a fourth message to a second network function, in which the fourth message is used to request authorization to update or delete an information exposure service, and/or, the fourth message includes at least one of: an ID of the first network function, or first information for which exposure is requested to be updated or deleted.

In this embodiment, the UPF facilitates the second network function to determine whether to update or delete the exposure of information to the first network function by sending a fourth message to the second network function, in which the fourth message includes first information for which exposure is requested to be updated or deleted. If it is determined that the exposure of information to the first network function can be updated or deleted, the second network function needs to determine the information for which exposure has been updated or deleted. That is, the above second information is determined by the second network function.

In this embodiment, the fourth message is used to request authorization to update or delete the information exposure service, i.e., to request the second network function to determine a result of updating or deleting the exposure of the first information, which means that the second network function determines whether to agree to update or delete the exposure of the first information to the first network function by the UPF.

In some optional embodiments, the method further includes: receiving by the UPF a fifth message sent by the second network function, in which the fifth message includes at least one of: an indication of successful update or deletion; an indication of failed update or deletion and/or a reason value; or second information for which exposure is updated or deleted.

Based on the above embodiments, the embodiment of the disclosure also provides a communication method. FIG. 3 is a second flowchart of a communication method of an embodiment of the disclosure. As illustrated in FIG. 3, the method includes the following steps.

At step 201, a first network function sends a first message to a UPF, in which the first message is used to request an update or deletion of a subscription to an information exposure service.

For example, the first message (or a subscription to request an update or deletion of the information exposure service) may be an unsubscribe request, a subscription updating request, a modify subscription request, a de-authorization request, an authorization update request, a de-authentication request, an authentication update request, an authorization subscription update request, an access authorization update request, an authorization delete request, a subscription releasing request, etc. This embodiment does not limit the name or type of the first message as long as it can achieve its function.

In the embodiment, optionally, the information exposure service is a service that the UPF exposes information to the first network function.

In some optional embodiments, sending by the first network function the first message to the UPF, includes: sending by the first network function the first message directly to the UPF, in which the first message includes a subscription-related ID of the first network function and/or an ID of the UPF; or, sending by the first network function the first message via other network functions, in which the first message includes the subscription-related ID of the first network function and/or the ID of the UPF.

Optionally, the ID of the UPF may be, for example, an IP address of the UPF and/or an FQDN.

In some optional embodiments, the first message includes first information for which exposure is requested to be updated or deleted.

In this embodiment, the first message may include first information. The first information represents a content for which exposure is requested to be updated or deleted, i.e. the exposure of what information is requested by the first network function to be updated or deleted.

In some optional embodiments of the disclosure, the method further includes: receiving by the first network function a second message sent by the UPF, in which the second message includes at least one of: an indication of successful update or deletion; an indication of failed update or deletion and/or a reason value; or second information for which exposure is updated or deleted.

Based on the above embodiments, the embodiment of the disclosure also provides a communication method. FIG. 4 is a third flowchart of a communication method of an embodiment of the disclosure. As illustrated in FIG. 4, the method includes the following steps.

At step 301, a second network function receives a fourth message sent by a UPF, in which the fourth message is configured to request authorization to update or delete an information exposure service, and/or, at step 302, the second network function determines a result of updating or deleting the information exposure service based on the fourth message.

In this embodiment, the fourth message is configured to request authorization to update or delete the information exposure service, i.e., to request the second network function to determine a result of updating or deleting the exposure of the first information, which means that the second network function determines whether to agree to update or delete the exposure of the first information to the first network function by the UPF.

In some optional embodiments, the information exposure service is a service that the UPF exposes information to a first network function.

In some optional embodiments, the fourth message includes at least one of: an ID of the first network function, or first information for which exposure is requested to be updated or deleted.

In some optional embodiments, the method further includes: sending by the second network function a fifth message to the UPF, in which the fifth message includes at least one of: an indication of successful update or deletion; an indication of failed update or deletion and/or a reason value; or second information for which exposure is updated or deleted.

In this embodiment, the UPF facilitates the second network function to determine whether to update or delete the exposure of information to the first network function by sending a fourth message to the second network function, in which the fourth message includes the first information for which exposure is requested to be updated or deleted. If it is determined that the exposure of information to the first network function can be updated or deleted, the second network function needs to determine what information for which the exposure has been updated or deleted. That is, the above second information is determined by the second network function. The second information is at least part of the first information.

The above communication methods of embodiments of the disclosure are described below in combination with specific examples. In the following examples, the first network function is represented by NF1, and the second network function is represented by the NF2.

### Example 1

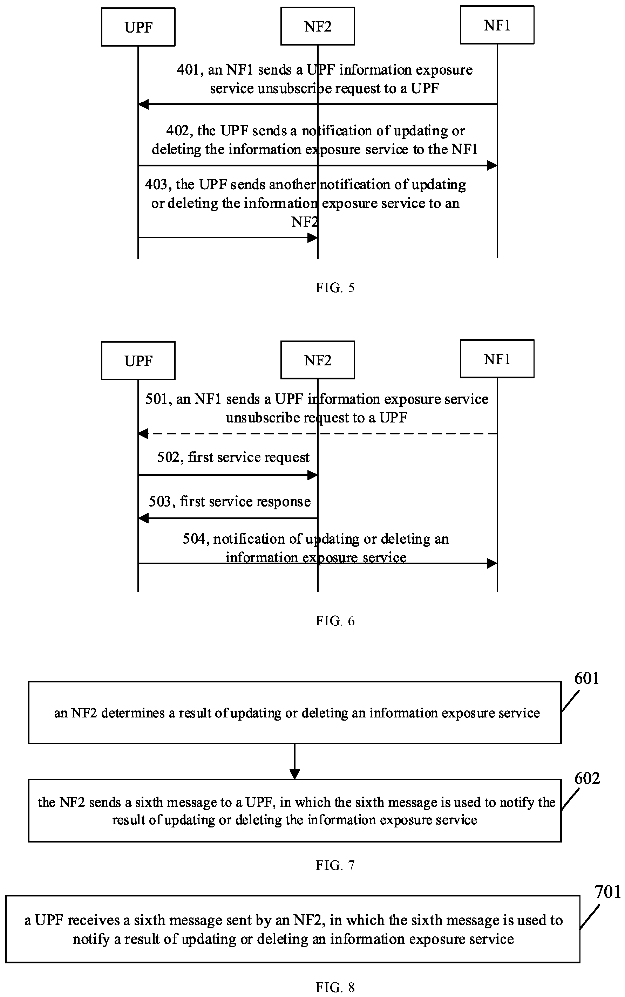

FIG. 5 is a first interaction schematic diagram of a communication method of an embodiment of the disclosure. As illustrated in FIG. 5, the method further includes the following steps.

At step 401, a first network function NF1 sends a UPF information exposure service unsubscribe request to a UPF.

The UPF information exposure service unsubscribe request is equivalent to the first message in the aforementioned embodiments.

In this example, the NF1 may send the UPF information exposure service unsubscribe request to the UPF via a Nupf_EventExposure_UnSubscribe service operation. The request may carry a subscription-related ID of the NF1 and/or an ID of the UPF.

At step 402, the UPF sends a notification of updating or deleting the information exposure service to the NF1.

The notification of updating or deleting the information exposure service is equivalent to the second message in the aforementioned embodiments.

In this example, the UPF may send the notification of updating or deleting the information exposure service directly to the NF1 via the Nupf_EventExposure_Notify service.

The notification of updating or deleting the information exposure service includes at least one of: an indication of successful update or deletion; an indication of failed update or deletion and/or a reason value; or second information for which exposure is updated or deleted. The second information may include at least one of: a QoS monitoring report; a QoS parameter, such as a 5QI, a packet delay, a packet loss rate, a data flow bit rate (e.g., a GFBR, a MFBR), a packet rate, and a usage report, and so on; real-time Service Flow Information, for example, the effective sampling intervals of different services are taken into account to facilitate data collection and analysis; IoT device related information; billing information; or UPF load information.

At step 403, the UPF sends a notification of updating or deleting the information exposure service to a second network function NF2.

The notification of updating or deleting the information exposure service is equivalent to the third message in the aforementioned embodiments.

In this example, the notification of updating or deleting the information exposure service may carry the ID of the NF1 (e.g., an NF name, an NF type, an IP address, an FQDN, etc.) and/or the second information described above.

### Example 2

FIG. 6 is a second interaction schematic diagram of a communication method of an embodiment of the disclosure. As illustrated in FIG. 6, the method further includes the following steps.

At step 501, a first network function NF1 sends a UPF information exposure service unsubscribe request to a UPF.

The UPF information exposure service unsubscribe request is equivalent to the first message in the aforementioned embodiments.

In this example, the NF1 may send the UPF information exposure service unsubscribe request to the UPF via a Nupf_EventExposure_UnSubscribe service operation. The request may carry a subscription-related ID of the NF1 and/or an ID of the UPF.

At step 502, the UPF sends a first service request to a second network function NF2.

The first service request is equivalent to the fourth message in the above embodiments.

In this embodiment, the UPF may call a first service of the NF2 to request authorization to update or delete the information exposure service of the NF1. For example, the first service request may carry the ID of the NF1 (e.g., an NF name, an NF type, an IP address, an FQDN, etc.), and first information for which exposure is requested to be updated/deleted. The first information may include at least one of: a QoS monitoring report; a QoS parameter, such as a 5QI, a packet delay, a packet loss rate, a data flow bit rate (e.g., a GFBR, a MFBR), a packet rate, and a usage report, and so on; real-time Service Flow Information, for example, the effective sampling intervals of different services are taken into account to facilitate data collection and analysis; IoT device related information; billing information; or UPF load information.

At step 503, the NF2 sends a first service response to the UPF.

The first service response is equivalent to the fifth message in the above embodiments.

In this example, the NF2 will decide whether to enable authorization for updating or deleting the information exposure service and send the first service response to the UPF.

For example, the NF2 may determine whether to enable the authorization for updating or deleting the information exposure service according to a local policy, in combination with the type of the NF1, the current state of the network, and the first information for which exposure is requested to be updated/deleted.

The first service response includes at least one of: an indication of successful update or deletion; an indication of failed update or deletion and/or a reason value; or second information for which exposure is updated or deleted.

The second information is at least part of the first information described above.

At step 504, the UPF sends a notification of updating or deleting an information exposure service to the NF1.

In this example, the UPF can send a notification of updating or deleting the information exposure service directly to the NF1 through a Nupf_EventExposure_Notify service.

The embodiment of the disclosure also provide a communication method. FIG. 7 is a fourth flowchart of a communication method of an embodiment of the disclosure. As illustrated in FIG. 7, the method further includes the following steps.

At step 601, a second network function NF2 determines a result of updating or deleting an information exposure service.

At step 602, the NF2 sends a sixth message to a UPF, in which the sixth message is configured to notify the result of updating or deleting the information exposure service.

In this embodiment, the NF2 can independently decide whether to update or delete the exposure of information to the first network function NF1, and sends the sixth message that carries the result of updating or deleting the information exposure service to the UPF. Optionally, if it is determined that the exposure of information to the NF1 can be updated or deleted, the NF2 can also make a decision on what information for which the exposure is updated or deleted.

In this embodiment, the sixth message is configured to notify the result of updating or deleting the information exposure service, that is, to notify the result of updating or deleting the exposure of information determined by the NF2, i.e., the NF2 determines whether it agrees to update or delete the exposure of information to the NF1 by the UPF.

In this embodiment, optionally, the information exposure service is a service that the UPF exposes information to the NF1.

In some optional embodiments, sending the sixth message to the UPF includes: sending by the NF2 the sixth message directly to the UPF; or, sending by the NF2 the sixth message to the UPF via other network functions.

Optionally, the sixth message includes at least one of: an indication of successful update or deletion; an ID of the UPF; an ID of the NF1; or second information for which exposure is updated or deleted.

In some optional embodiments of the disclosure, the method also includes: receiving by the NF2 a seventh message sent by the NF1, in which the seventh message is configured to request authorization to update or delete an information exposure service; and/or, the seventh message includes at least one of: an ID of the UPF, an ID of the NF1, or first information for which exposure is requested to be updated or deleted.

In this embodiment, the seventh message is configured to request authorization to update or delete the information exposure service, i.e., the result of the NF1 requesting to update or delete the information exposure service. After receiving the seventh message, the NF2 may decide to agree to update or delete the first information exposed by the UPF, or may decide to disagree to update or delete the first information exposed by the UPF.

Optionally, the ID of the UPF may be, for example, an IP address of the UPF and/or an FQDN. The ID of the NF1 may include at least one of: a name of the NF1, a type of the NF1, an IP address of the NF1, and an FQDN.

In some optional embodiments of the disclosure, the method also includes: sending by the NF2 an eighth message to the NF1, in which the eighth message is configured to respond to the result of updating or deleting the information exposure service.

Optionally, the eighth message includes at least one of: an indication of successful update or deletion; an indication of failed update or deletion and/or a reason value; or second information for which exposure is updated or deleted.

Based on the above embodiments, the embodiment of the disclosure also provide a communication method. FIG. 8 is a fifth flowchart of a communication method of an embodiment of the disclosure. As illustrated in FIG. 8, the method further includes the following steps.

At step 701, a UPF receives a sixth message sent by a second network function NF2, in which the sixth message is used to notify a result of updating or deleting an information exposure service.

In this embodiment, the sixth message is used to notify the result of updating or deleting the information exposure service, i.e., the NF2 determines the result of updating or deleting the exposure of information, and notifies the UPF of the result of updating or deleting the information exposure service through the sixth message. The NF2 can independently decide whether to update or delete the exposure of information to the first network function, and notifies the UPF that it agrees to update or delete the exposure of the first information by the UPF, or notifies the UPF that it does not agree to update or delete the exposure of the first information by the UPF.

In this embodiment, optionally, the information exposure service is a service that the UPF exposes information to a first network function NF1.

In some optional embodiments, receiving by the UPF the sixth message sent by the NF2, includes: directly receiving by the UPF the sixth message sent by the NF2; or, receiving by the UPF the sixth message sent by the NF2 via other network functions.

Optionally, the sixth message includes at least one of: an indication of successful update or deletion; an ID of the UPF; an ID of the NF1; or second information for which exposure is updated or deleted.

Optionally, the ID of the UPF may be, for example, an IP address of the UPF and/or an FQDN. The ID of the NF1 may include at least one of: a name of the NF1, a type of the NF1, an IP address of the NF1, and an FQDN.

In some optional embodiments of the disclosure, the method also includes: sending by the UPF a ninth message to an NF1. The ninth message is configured to notify a result of updating or deleting the information exposure service. The ninth message includes at least one of: an indication of successful update or deletion; an indication of failed update or deletion and/or a reason value; or second information for which exposure is updated or deleted.

In this embodiment, the ninth message is used to notify the authorization result of updating or deleting the information exposure service. That is, the UPF notifies the NF1 of the result of updating or deleting the information exposure service.

In some optional embodiments, sending by the UPF the ninth message to the NF1, includes: sending by the UPF the ninth message directly to the NF1; or, sending by the UPF the ninth message to the NF1 via other network functions.

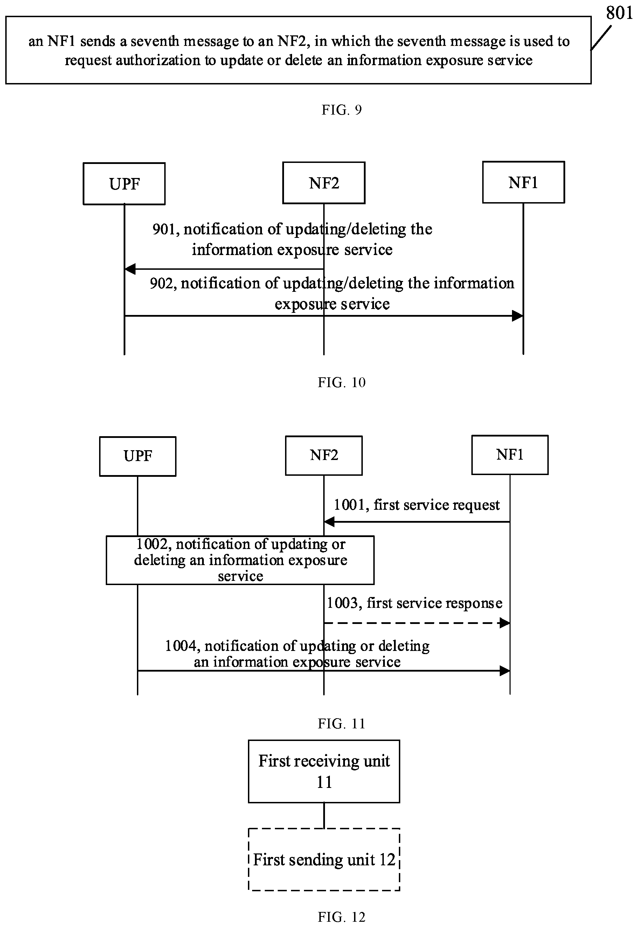

Based on the above embodiments, the embodiment of the disclosure also provide a communication method. FIG. 9 is a sixth flowchart of a communication method of an embodiment of the disclosure. As illustrated in FIG. 9, the method further includes the following steps.

At step 801, a first network function NF 1 sends a seventh message to a second network function NF2, in which the seventh message is configured to request authorization to update or delete an information exposure service.

In this embodiment, optionally, the information exposure service is a service that a UPF exposes information to the NF1.

In this embodiment, the seventh message is configured to request authorization to update or delete the information exposure service. The seventh message is the result of the NF1 requesting to update or delete the information exposure service. After receiving the seventh message, the NF2 may determine to agree to update or delete the exposure of the first information by the UPF, or may determine to disagree to update or delete the exposure of the first information by the UPF.

Optionally, the seventh message includes at least one of: an ID of the UPF, an ID of the NF1, or first information for which exposure is requested to be updated or deleted.

Optionally, the ID of the UPF may be, for example, an IP address of the UPF and/or an FQDN. The ID of the NF1 may include at least one of: a name of the NF1, a type of the NF1, an IP address of the NF1, and an FQDN.

In some optional embodiments of the disclosure, the method also includes: sending by the NF2 an eighth message to the NF1, in which the eighth message is used to respond to the result of updating or deleting the information exposure service.

Optionally, the eighth message includes at least one of: an indication of successful update or deletion; an indication of failed update or deletion and/or a reason value; or second information for which exposure is updated or deleted.

In some optional embodiments of the disclosure, the method also includes: receiving by the NF1 a ninth message sent by a UPF, in which the ninth message is used to notify a result of updating or deleting an information exposure service. The ninth message includes at least one of: an indication of successful update or deletion; an indication of failed update or deletion and/or a reason value; or second information for which exposure is updated or deleted.

In this embodiment, the ninth message is used to notify the authorization result of updating or deleting the information exposure service. That is, the UPF notifies the NF1 of the result of updating or deleting the information exposure service.

In some optional embodiments, receiving by the NF1 the ninth message sent by the UPF, includes: directly receiving by the NF1 the ninth message sent by the UPF; or, receiving by the NF1 the ninth message sent by the UPF via other network functions.

The above communication methods of embodiments of the disclosure are described below in combination with specific examples. In the following examples, the first network function is represented by an NF1, and the second network function is represented by an NF2.

### Example 3

FIG. 10 is a third interaction schematic diagram of a communication method of an embodiment of the disclosure. As illustrated in FIG. 10, the method includes the following steps.

At step 901, a second network function NF2 decides to enable authorization the update/deleting a UPF information exposure service of a first network function NF1 according to a local policy, determines a result of updating/deleting the information exposure service, and sendsa notification of updating/deleting the information exposure service to a UPF.

The notification of updating/deleting the information exposure service is equivalent to the sixth message in the preceding embodiments.

In this example, the notification of updating/deleting the information exposure service may carry the ID of the UPF (e.g., an IP address of the UPF or an FQDN), the ID of the NF1 (e.g., an NF name, an NF type, an IP address, or an FQDN), second information for which exposure is updated/deleted. The second information may include at least one of: a QoS monitoring report; a QoS parameter, such as a 5QI, a packet delay, a packet loss rate, a data flow bit rate (e.g., a GFBR, a MFBR), a packet rate, and a usage report; real-time service flow information, for example, the effective sampling intervals of different services are taken into account to facilitate data collection and analysis; IoT device related information; billing information; or UPF load information.

At step 902, a UPF sends a notification of updating or deleting an information exposure service to the NF1.

In this example, the UPF may directly send the notification of updating or deleting the information exposure service to the NF1 via a Nupf_EventExposure_Notify service.

### Example 4

FIG. 11 is a fourth interaction schematic diagram of a communication method of an embodiment of the disclosure. As illustrated in FIG. 11, the method includes the following steps.

At step 1001, a first network function NF1 sends a first service request to a second network function NF2.

The first service request is equivalent to the seventh message in the above embodiments.

In this example, the NF1 calls a first service of the NF2 to request authorization to update or delete the information exposure service of the NF1. For example, the first service request may carry the ID of the UPF (e.g., an IP address of the UPF or an FQDN), the ID of the NF1 (e.g., an NF name, an NF type, an IP address, an FQDN, etc.), and first information for which exposure is requested to be updated/deleted. The first information may include at least one of: a QoS monitoring report; a QoS parameter, such as a 5QI, a packet delay, a packet loss rate, a data flow bit rate (e.g., a GFBR, a MFBR), a packet rate, and a usage report; real-time Service Flow Information, for example, the effective sampling intervals of different services are taken into account to facilitate data collection and analysis; IoT device related information; billing information; or UPF load information.

At step 1002, the NF2 sends a notification of updating or deleting an information exposure service to a UPF.

The notification of updating or deleting the information exposure service is equivalent to the sixth message in the aforementioned embodiments.

In this example, the NF2 will determine to enable authorization to update/delete the information exposure service and send a notification of updating or deleting the information exposure service to the UPF.

If the NF2 does not enable authorization to update/delete the information exposure service, step 1003 is directly executed rather than step 1002, and a rejection reason value is carried.

For example, the NF2 may determine whether to enable authorization to update/delete the information exposure service according to a local policy, in combination with the type of the NF1, the current state of the network (such as whether signaling is overloaded), the content of the first information for which exposure is requested to be updated/deleted, and the like.

Optionally, upon determining the result of updating or deleting the information exposure service, sending by the NF2 a notification of updating or deleting the information exposure service to the UPF, to instruct or notify the UPF to update/delete the exposure of information to the NF1.

At step 1003, the NF2 sends a first service response to the NF1.

This step is optional. This step may be performed before or after step 1002.

The first service response is equivalent to the eighth message in the aforementioned embodiments. The eighth message includes at least one of: an indication of successful update or deletion, an indication of failed update or deletion and/or a reason value, or second information for which exposure is updated or deleted. The second information is at least part of the first information.

At step 1004, the UPF sends a notification of updating or deleting the information exposure service to the NF1.

In this example, the UPF may directly send the notification of updating or deleting the information exposure service to the NF1 through a Nupf_EventExposure_Notify service, or may reply a response or notification message to the NF2. Then the NF2 sends a first service response to the NF1.

For example, the notification of updating or deleting the information exposure service may at least include the second information for which exposure is updated or deleted.

In each embodiment of the disclosure, the NF1 may be an AF, a PCF, a NWDAF, a NEF, a CHF, etc. The NF2 may be a PCF, a NEF, a SMF, etc. For example, the NF1 is an AF, the NF2 is a PCF, and the AF sends a message to the UPF through the PCF (or SMF). For another example, the NF1 is a NWDAF, the NF2 is a SMF, and the NWDAF sends the message to the UPF through the SMF.

Based on the above embodiments, the embodiment of the disclosure also provides a communication device. FIG. 12 is a first schematic diagram of a communication apparatus of an embodiment of the disclosure. As illustrated in FIG. 12, the apparatus includes: a first receiving unit 11 configured to receive a first message sent by an NF1, in which the first message is used to request to update or delete a subscription to an information exposure service.

In some optional embodiments of the disclosure, the information exposure service is a service that the UPF exposes information to the NF1.

In some optional embodiments of the disclosure, the first receiving unit 11 is configured to: directly receive the first message sent by the NF1, in which the first message includes a subscription-related ID of the NF1 and/or an ID of the UPF; or, receive the first message sent by the NF1 via other network functions, in which the first message includes the subscription-related ID of the first network function and/or the ID of the UPF.

In some optional embodiments of the disclosure, the first message includes first information for which exposure is requested to be updated or deleted.

In some optional embodiments of the disclosure, the apparatus includes: a first sending unit 12, configured to send a second message to the NF1, in which the second message includes at least one of: an indication of successful update or deletion; an indication of failed update or deletion and/or a reason value; or second information for which exposure is updated or deleted.

In some optional embodiments of the disclosure, the first sending unit 12 is further configured to: send a third message to an NF2, in which the third message is used to notify that a subscription to an information exposure service has been updated or deleted, and/or, the third message includes at least one of: an ID of the first network function, or the second information.

In some optional embodiments of the disclosure, the apparatus includes: a first sending unit 12, configured to send a fourth message to an NF2, in which the fourth message is used to request authorization to update or delete an information exposure service, and/or, the fourth message includes at least one of: an ID of the NF1, or first information for which exposure is requested to be updated or deleted.

In some optional embodiments of the disclosure, the first receiving unit 11 is further configured to: receive a fifth message sent by the NF2, in which the fifth message includes at least one of: an indication of successful update or deletion; an indication of failed update or deletion and/or a reason value; or second information for which exposure is determined to be updated or deleted.

In the embodiment of the disclosure, the apparatus is applied in a UPF. The first receiving unit 11 and the first sending unit 12 in the apparatus can be realized in practice by means of communication modules (including: a basic communication kit, an operating system, a communication module, standardized interfaces and protocols, etc.) and a transceiver antenna.

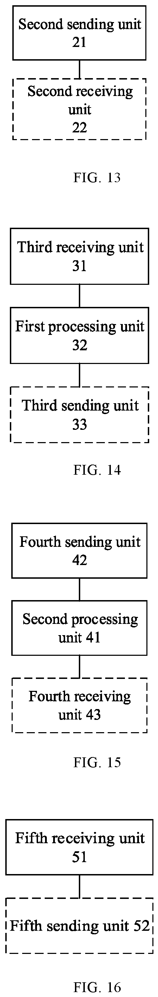

Embodiments of the disclosure also provide a communication apparatus. FIG. 13 is a second schematic diagram of a communication apparatus of an embodiment of the disclosure. As shown in FIG. 13, the apparatus includes: a second sending unit 21, configured to send a first message to a UPF, in which the first message is used to request to update or delete a subscription to an information exposure service.

In some optional embodiments of the disclosure, the information exposure service is a service that the UPF exposes information to the NF1.

In some optional embodiments of the disclosure, the second sending unit 21 is further configured to: send the first message directly to the UPF, in which the first message includes a subscription-related ID of the first network function and/or an ID of the UPF; or, send the first message via other network functions, in which the first message includes the subscription-related ID of the first network function and/or the ID of the UPF.

In some optional embodiments of the disclosure, the first message includes first information for which exposure is requested to be updated or deleted.

In some optional embodiments of the disclosure, the apparatus further includes a second receiving unit 22, configured to receive a second message sent by the UPF, in which the second message includes at least one of: an indication of successful update or deletion; an indication of failed update or deletion and/or a reason value; or second information for which exposure is updated or deleted.

In the embodiment of the disclosure, the apparatus is applied in an NF1. The second sending unit 21 and the second receiving unit 22 in the apparatus can be realized in practice by means of communication modules (including: a basic communication kit, an operating system, a communication module, standardized interfaces and protocols, etc.) and a transceiver antenna.

Embodiments of the disclosure also provide a communication apparatus. FIG. 14 is a third schematic diagram of a communication apparatus of an embodiment of the disclosure. As illustrated in FIG. 14, the apparatus includes: a third receiving unit 31 and/or a first processing unit 32.

The third receiving unit 31 is configured to receive a fourth message sent by a UPF, in which the fourth message is used to request authorization to update or delete an information exposure service.

The first processing unit 32 is configured to determine a result of updating or deleting the information exposure service based on the fourth message.

In some optional embodiments of the disclosure, the information exposure service is a service that the UPF exposes information to an NF1.

In some optional embodiments of the disclosure, the fourth message includes at least one of: an ID of an NF1, or first information for which exposure is requested to be updated or deleted.

In some optional embodiments of the disclosure, the apparatus further includes: a third sending unit 33, configured to send a fifth message to the UPF, in which the fifth message includes at least one of: an indication of successful update or deletion; an indication of failed update or deletion and/or a reason value; or second information for which exposure is updated or deleted.

In embodiments of the disclosure, the apparatus is applied in an NF2. The first processing unit 32 in the apparatus may be realized by a central processing unit (CPU), a digital signal processor (DSP), a microcontroller unit (MCU) or a field-programmable gate array (FPGA) in practical applications. The third receiving unit 31 and the third sending unit 33 in the apparatus can be realized in practice by means of communication modules (including: a basic communication kit, an operating system, a communication module, standardized interfaces and protocols, etc.) and a transceiver antenna.

Embodiments of the disclosure also provide a communication apparatus. FIG. 15 is a fourth schematic diagram of a communication apparatus of an embodiment of the disclosure. As illustrated in FIG. 15, the apparatus includes: a second processing unit 41 and a fourth sending unit 42.

The second processing unit 41 is configured to determine a result of updating or deleting an information exposure service.

The fourth sending unit 42 is configured to send a sixth message to a UPF, in which the sixth message is used to notify the result of updating or deleting the information exposure service.

In some optional embodiments of the disclosure, the information exposure service is a service that the UPF exposes UPF event to an NF1.

In some optional embodiments of the disclosure, the fourth sending unit 42 is configured to directly send the sixth message to the UPF, or, send the sixth message to the UPF via other network functions.

In some optional embodiments of the disclosure, the sixth message includes at least one of: an indication of successful update or deletion; an ID of the UPF; an ID of a first network function; or second information for which exposure is updated or deleted.

In some optional embodiments of the disclosure, the apparatus further includes a fourth receiving unit 43, configured to receive a seventh message sent by an NF1, in which the seventh message is used to request authorization to update or delete an information exposure service; and/or, the seventh message includes at least one of: an ID of the UPF, an ID of the NF1, first information for which exposure is requested to be updated or deleted.

In some optional embodiments of the disclosure, the fourth sending unit 42 is configured to send an eighth message to the NF1, in which the eighth message is used to respond to the result of updating or deleting the information exposure service.

Optionally, the eighth message includes at least one of: an indication of successful update or deletion; an indication of failed update or deletion and/or a reason value; or second information for which exposure is updated or deleted.

In embodiments of the disclosure, the apparatus is applied in an NF2. The second processing unit 41 in the apparatus can be implemented by a CPU, a DSP, a MCU or an FPGA in practical applications. The fourth receiving unit 43 and the fourth sending unit 42 in the apparatus can be implemented by communication modules (including: a basic communication kit, an operating system, a communication module, standardized interfaces and protocols, etc.) and a transceiver antenna in practical applications.

Embodiments of the disclosure also provide a communication apparatus. FIG. 16 is a fifth schematic diagram of a communication apparatus of an embodiment of the disclosure. As illustrated in FIG. 16, the apparatus includes: a fifth receiving unit 51, configured to receive a sixth message sent by an NF2, in which the sixth message is used to notify a result of updating or deleting an information exposure service.

In some optional embodiments of the disclosure, the information exposure service is a service that the UPF exposes information to an NF1.

In some optional embodiments of the disclosure, the fifth receiving unit 51 is further configured to: directly receive the sixth message sent by the NF2; or, receive the sixth message sent by the NF2 via other network functions.

In some optional embodiments of the disclosure, the sixth message includes at least one of: an indication of successful update or deletion; an ID of the UPF; an ID of a first network function; or second information for which exposure is updated or deleted.

In some optional embodiments of the disclosure, the apparatus further includes a fifth sending unit 52, configured to send a ninth message to an NF1, in which the ninth message includes at least one of: an indication of successful update or deletion; an indication of failed update or deletion and/or a reason value; or second information for which exposure is updated or deleted.

In some optional embodiments of the disclosure, the fifth sending unit 52 is configured to directly send the ninth message to the NF1; or, send the ninth message to the NF1 via other network functions.

In embodiments of the disclosure, the apparatus is applied in a UPF. The fifth receiving unit 51 and the fifth sending unit 52 in the apparatus can be implemented by communication modules (including: a basic communication kit, an operating system, a communication module, standardized interfaces and protocols, etc.) and a transceiver antenna in practical applications.

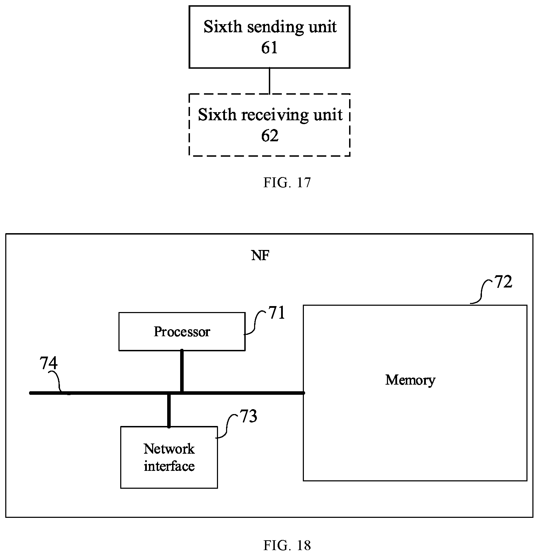

Embodiments of the disclosure also provide a communication apparatus. FIG. 17 is a sixth schematic diagram of a communication apparatus of an embodiment of the disclosure. As illustrated in FIG. 17, the apparatus includes: a sixth sending unit 61, configured to send a seventh message to an NF2, in which the seventh message is used to request authorization to update or delete an information exposure service.

In some optional embodiments of the disclosure, the information exposure service is a service that the UPF exposes information to an NF1.

In some optional embodiments of the disclosure, the seventh message includes at least one of: an ID of a UPF, an ID of the NF1, or first information for which exposure is requested to be updated or deleted.

In some optional embodiments of the disclosure, the apparatus further includes: a sixth receiving unit 62, configured to receive an eighth message sent by the NF2, in which the eighth message includes at least one of: an indication of successful update or deletion; an indication of failed update or deletion and/or a reason value; or second information for which exposure is updated or deleted.

In some optional embodiments of the disclosure, the sixth receiving unit 62 included in the apparatus is further configured to receive a ninth message sent by a UPF, in which the ninth message is used to notify a result of updating or deleting an information exposure service, and the ninth message includes at least one of: an indication of successful update or deletion; an indication of failed update or deletion and/or a reason value; or second information for which exposure is updated or deleted.

In some optional embodiments of the disclosure, the sixth receiving unit 62 is further configured to directly receive the ninth message sent by the UPF; or, receive the ninth message sent by the UPF via other network functions.

In embodiments of the disclosure, the apparatus is applied in an NF1. The sixth receiving unit 62 and the sixth sending unit 61 in the apparatus can be implemented by communication modules (including: a basic communication kit, an operating system, a communication module, standardized interfaces and protocols, etc.) and a transceiver antenna in practical applications.

It should be noted that when the communication apparatus provided in the above embodiments is communicating, the above-mentioned program modules are classified and used as examples. In actual applications, the above-mentioned processes are assigned to different program modules as needed, that is, the internal structure of the apparatus is divided into different program modules to complete all or part of the processes described above. In addition, the communication apparatuses provided in the above embodiments and the embodiments of the communication method belong to the same concept, and their specific implementation processes are described in detail in the method embodiments, which will not be repeated here.

The embodiments of the disclosure also provide an NF, such as a UPF, an NF1 or an NF2 in the aforementioned embodiments. FIG. 18 is a schematic diagram of hardware structure of an NF of an embodiment of the disclosure. As illustrated in FIG. 18, the NF includes a memory 72, a processor 71, and a computer program stored in the memory 72 and executable by the processor 71. When the processor 71 executes the program, the steps of the communication method applied to the UPF in the embodiments of the disclosure are implemented; or, when the processor 71 executes the program, the steps of the communication method applied to the NF1 in the embodiments of the disclosure are implemented; or, when the processor 71 executes the program, the steps of the communication method applied to the NF2 in the embodiments of the disclosure are implemented.

Optionally, the NF further includes at least one network interface 73. The various components in the communication apparatus are coupled together via a bus system 74. It is understood that the bus system 74 is used to connect these components and achieve communication between them. The bus system 74 includes not only a data bus but also a power bus, a control bus and a status signal bus. However, for the sake of clarity, these buses are labeled as a bus system 74 in FIG. 18.

It is understood that the memory 72 may be a volatile memory or a non-volatile memory, or may include both volatile and non-volatile memories. The non-volatile memory may be a read-only memory (ROM), a programmable read-only memory (PROM), an erasable programmable ROM (EPROM), an electrically erasable programmable ROM (EEPROM), a ferromagnetic random access memory (FRAM), a flash memory, a magnetic surface memory, an optical disc, or a compact disc ROM (CD-ROM). The magnetic surface memory can be a disk memory or a tape memory. The volatile memory may be a random access memory (RAM), which is used as an external cache. By way of example and not limitation, there are various RAMs that are available, such as a static RAM (SRAM), synchronous static RAM (SSRAM), dynamic RAM (DRAM), synchronous dynamic RAM (SDRAM), double data rate synchronous dynamic RAM (DDRSDRAM), enhanced synchronous dynamic RAM (ESDRAM), SyncLink dynamic RAM (SLDRAM), and direct Rambus RAM (DRRAM). The memory 72 described in the embodiments of the disclosure aims to include, but is not limited to, these and any other suitable types of memories.

The method disclosed in the above-mentioned embodiments of the disclosure may be applied to the processor 71 or implemented by the processor 71. The processor 71 may be an integrated circuit chip with signal processing capabilities. In the implementation process, each step of the above method can be performed by an integrated logic circuit of hardware in the processor 71 or instructions in the form of software. The above processor 71 may be a general-purpose processor, a DSP, or other programmable logic devices, discrete gated or transistor logic devices, discrete hardware components, etc. The processor 71 can implement or execute the methods, steps and logic block diagrams disclosed in the embodiments of the disclosure. The general-purpose processor may be a microprocessor or any conventional processor or the like. The steps of the method disclosed in the embodiments of the disclosure may be directly implemented by a hardware decoding processor, or may be implemented by a combination of hardware and software modules in the decoding processor. The software module may be located in a storage medium. The storage medium is located in the memory 72. The processor 71 reads information in the memory 72 and implements the steps of the aforementioned methods in combination with its hardware.

In an exemplary embodiment, the NF can be implemented by one or more application specific integrated circuits (ASICs), DSPs, programmable logic devices (PLDs), complex programmable logic devices (CPLDs), FPGAs, general-purpose processors, controllers, MCUs, microprocessors, or other electronic components to execute the aforementioned methods.

In an exemplary embodiment, the disclosure also provides a computer-readable storage medium, such as the memory 72 including a computer program. The computer program can be executed by the processor 71 of the NF to execute the steps of the aforementioned method. The computer-readable storage medium may be a memory such as a FRAM, a ROM, a PROM, an EPROM, an EEPROM, a flash memory, a magnetic surface storage, an optical disk, or a CD-ROM. Or, the computer-readable storage medium may be one of the above memories or any combination of various devices.

The embodiments of the disclosure also provide a computer-readable storage medium having a computer program stored thereon. When the program is executed by a processor, the steps of the communication method applied to the UPF in the embodiments of the disclosure are implemented; or, when the program is executed by a processor, the steps of the communication method applied to the NF1 in the embodiments of the disclosure are implemented; or, when the program is executed by a processor, the steps of the communication method applied to the NF2 in the embodiments of the disclosure are implemented.

The methods disclosed in the method embodiments of the disclosure can be arbitrarily combined without conflict to obtain new method embodiments.

The characteristics disclosed in the product embodiments of the disclosure can be arbitrarily combined without conflict to obtain new product embodiments.

The characteristics disclosed in the method embodiments or device embodiments of the disclosure may be arbitrarily combined without conflict to obtain new method embodiments or new device embodiments.

In the embodiments of the disclosure, it should be understood that the disclosed devices and methods may be implemented in other ways. The device embodiments described above are merely illustrative. For example, the classification of units is merely depends on their logical functions, and there may be other classification methods in actual implementations. For example, a plurality of units or components may be combined, or may be integrated into another system, or some characteristics may be omitted or not executed. In addition, the components shown or discussed may be coupled, directly coupled or connected for communication through some interfaces, indirect coupling or communication connection between devices or units may be electrical, mechanical or in other forms.

The units described above as separate components may or may not be physically separated. The components displayed as units may or may not be physical units, that is, they may be located in one place or distributed on a plurality of network elements. Some or all of the units may be selected according to actual needs to achieve the purpose of the scheme of this embodiment.

In addition, all functional units in the embodiments of the disclosure may be integrated in one processing unit, or each unit may be separately configured as a unit, or two or more units may be integrated into one unit. The above-mentioned integrated units may be implemented in the form of hardware or in the form of hardware and software functional units.

Those skilled in the art understand that all or part of the steps of implementing the above-mentioned method embodiments can be completed by hardware related to program instructions, and the aforementioned programs are stored in a computer-readable storage medium. When the programs are executed, the steps of the above-mentioned method embodiments are implemented. The aforementioned storage medium includes: various mediums that can store program codes, such as a mobile storage device, a ROM, a RAM, a disk or an optical disk.

Alternatively, if the above-mentioned integrated unit of the disclosure is implemented in the form of a software function module and sold or used as an independent product, it may be stored in a computer-readable storage medium. Based on this understanding, the technical solution of the embodiments of the disclosure essentially or the part that contributes to the related art can be embodied in the form of a software product. The computer software product is stored in a storage medium and includes several instructions for causing a computer device (which can be a personal computer, a server, or a network device, etc.) to execute all or part of the methods described in the various embodiments of the disclosure. The aforementioned storage medium includes: a mobile storage device, a ROM, a RAM, a magnetic disk, an optical disk or other mediums that can store program codes.

The above description is only a specific implementation of the disclosure, but the protection scope of the disclosure is not limited thereto. Those familiar with the technical field can easily think of changes or substitutions within the technical scope disclosed in the disclosure, and these changes or substitutions should be included in the protection scope of the disclosure. Therefore, the protection scope of the disclosure should be based on the protection scope of the claims.

## Claims

1. A communication method, comprising:
receiving, by a user plane function (UPF), a first message sent by a first network function, wherein the first message is configured to request an update or deletion of a subscription to an information exposure service.

2. The method of claim 1, wherein the information exposure service is a service that the UPF exposes information to the first network function.

3. The method of claim 1, wherein receiving, by the UPF, the first message sent by the first network function, comprises:
directly receiving, by the UPF, the first message sent by the first network function, wherein the first message comprises a subscription-related identifier (ID) of the first network function and/or an ID of the UPF;
or, receiving, by the UPF, the first message sent by the first network function via other network functions, wherein the first message comprises the subscription-related ID of the first network function and/or the ID of the UPF.

4. The method of claim 1, wherein the first message comprises first information for which exposure is requested to be updated or deleted.

5. The method of claim 1, further comprising:
sending, by the UPF, a second message to the first network function, wherein the second message comprises at least one of:
an indication of successful update or deletion;
an indication of failed update or deletion and/or a reason value; or
second information for which exposure is updated or deleted.

6. The method of claim 5, further comprising:
sending, by the UPF, a third message to a second network function;
wherein the third message is configured to notify that the subscription to the information exposure service has been updated or deleted, and/or, the third message comprises at least one of: an ID of the first network function, or the second information.

7. The method of any one of claims 1-5, further comprising:
sending, by the UPF, a fourth message to a second network function;
wherein the fourth message is configured to request authorization to update or delete the information exposure service, and/or, the fourth message comprises at least one of: an ID of the first network function, or first information for which exposure is requested to be updated or deleted.

8. The method of claim 7, further comprising:
receiving, by the UPF, a fifth message sent by the second network function, wherein the fifth message comprises at least one of:
an indication of successful update or deletion;
an indication of failed update or deletion and/or a reason value; or
determined second information for which exposure is updated or deleted.

9. A communication method, comprising:
sending, by a first network function, a first message to a user plane function (UPF), wherein the first message is configured to request an update or deletion of a subscription to an information exposure service.

10. The method of claim 9, wherein the information exposure service is a service that the UPF exposes information to the first network function.

11. The method of claim 9, wherein sending, by the first network function, the first message to the UPF, comprises:
directly sending, by the first network function, the first message to the UPF, wherein the first message comprises a subscription-related identifier (ID) of the first network function and/or an ID of the UPF;
or, sending, by the first network function, the first message via other network functions, wherein the first message comprises the subscription-related ID of the first network function and/or the ID of the UPF.

12. The method of claim 9, wherein the first message comprises first information for which exposure is requested to be updated or deleted.

13. The method of claim 9, further comprising:
receiving, by the first network function, a second message sent by the UPF, wherein the second message comprises at least one of:
an indication of successful update or deletion;
an indication of failed update or deletion and/or a reason value; or
second information for which exposure is updated or deleted.

14. A communication method, comprising:
receiving, by a second network function, a fourth message sent by a user plane function (UPF), wherein the fourth message is configured to request authorization to update or delete an information exposure service,
and/or, determining, by the second network function, a result of updating or deleting the information exposure service based on the fourth message.

15. The method of claim 14, wherein the information exposure service is a service that the UPF exposes information to a first network function.

16. The method of claim 14, wherein the fourth message comprises at least one of: an ID of a first network function, or first information for which exposure is requested to be updated or deleted.

17. The method of claim 16, further comprising:
sending, by the second network function, a fifth message to the UPF, wherein the fifth message comprises at least one of:
an indication of successful update or deletion;
an indication of failed update or deletion and/or a reason value; or
second information for which exposure is updated or deleted.

18. A communication method, comprising:
determining, by a second network function, a result of updating or deleting an information exposure service; and
sending a sixth message to a user plane function (UPF), wherein the sixth message is configured to notify the result of updating or deleting the information exposure service.

19. The method of claim 18, wherein the information exposure service is a service that the UPF exposes information to a first network function.

20. The method of claim 18, wherein sending the sixth message to the UPF, comprises:
directly sending, by the second network function, the sixth message directly to the UPF; or,
sending, by the second network function, the sixth message to the UPF via other network functions.

21. The method of claim 20, wherein the sixth message comprises at least one of:
an indication of successful update or deletion;
an identifier (ID) of the UPF;
an ID of a first network function; or
second information for which exposure is updated or deleted.

22. The method of claim 18, further comprising:
receiving, by the second network function, a seventh message sent by a first network function, wherein the seventh message is configured to request authorization to update or delete the information exposure service; and/or,
wherein the seventh message comprises at least one of: an ID of the UPF, an ID of the first network function, first information for which exposure is requested to be updated or deleted.

23. The method of claim 22, further comprising:
sending, by the second network function an eighth message to the first network function, wherein the eighth message is configured to respond to the result of updating or deleting the information exposure service.

24. The method of claim 23, wherein the eighth message comprises at least one of:
an indication of successful update or deletion;
an indication of failed update or deletion and/or a reason value; or
second information for which exposure is updated or deleted.

25. A communication method, comprising:
receiving, by a user plane function (UPF), a sixth message sent by a second network function, wherein the sixth message is configured to notify a result of updating or deleting an information exposure service.

26. The method of claim 25, wherein the information exposure service is a service that the UPF exposes information to a first network function.

27. The method of claim 25, wherein receiving, by the UPF, the sixth message sent by the second network function, comprises:
directly receiving, by the UPF, the sixth message sent by the second network function; or,
receiving, by the UPF, the sixth message sent by the second network function via other network functions.

28. The method of claim 25, wherein the sixth message comprises at least one of:
an indication of successful update or deletion;
an identifier (ID) of the UPF;
an ID of a first network function; or
second information for which exposure is updated or deleted.

29. The method of claim 25, further comprising:
sending, by the UPF, a ninth message to a first network function, wherein the ninth message comprises at least one of:
an indication of successful update or deletion;
an indication of failed update or deletion and/or a reason value; or
second information for which exposure is updated or deleted.

30. The method of claim 29, wherein sending, by the UPF, the ninth message to the first network function, comprises:
directly sending, by the UPF, the ninth message to the first network function; or,
sending, by the UPF, the ninth message to the first network function via other network functions.

31. A communication method, comprising:
sending, by a first network function, a seventh message to a second network function, wherein the seventh message is configured to request authorization to update or delete an information exposure service.

32. The method of claim 31, wherein the information exposure service is a service that a user plane function (UPF) exposes information to the first network function.

33. The method of claim 31, wherein the seventh message comprises at least one of:
an identifier (ID) of a UPF, an ID of the first network function, or first information for which exposure is requested to be updated or deleted.

34. The method of claim 31, further comprising:
receiving, by the first network function, an eighth message sent by the second network function, wherein the eighth message comprises at least one of:
an indication of successful update or deletion;
an indication of failed update or deletion and/or a reason value; or
second information for which exposure is updated or deleted.

35. The method of claim 31, further comprising:
receiving, by the first network function, a ninth message sent by a UPF, wherein the ninth message is configured to notify a result of updating or deleting an information exposure service, and the ninth message comprises at least one of:
an indication of successful update or deletion;
an indication of failed update or deletion and/or a reason value; or
second information for which exposure is updated or deleted.

36. The method of claim 35, wherein receiving, by the first network function, the ninth message sent by the UPF, comprises:
directly receiving, by the first network function, the ninth message sent by the UPF; or,
receiving, by the first network function, the ninth message sent by the UPF via other network functions.

37. A communication apparatus, comprising: a first receiving unit configured to receive a first message sent by a first network function, wherein the first message is configured to request an update or deletion of a subscription to an information exposure service.

38. A communication apparatus, comprising: a second sending unit configured to send a first message to a user plane function (UPF), wherein the first message is configured to request an update or deletion of a subscription to an information exposure service.

39. A communication apparatus, comprising: a third receiving unit and/or a first processing unit;
wherein the third receiving unit is configured to receive a fourth message sent by a user plane function (UPF), wherein the fourth message is configured to request authorization to update or delete an information exposure service;
the first processing unit is configured to determine a result of updating or deleting the information exposure service based on the fourth message.

40. A communication apparatus, comprising: a second processing unit and a fourth sending unit;
wherein the second processing unit is configured to determine a result of updating or deleting an information exposure service;
the fourth sending unit is configured to send a sixth message to a user plane function (UPF), wherein the sixth message is configured to notify the result of updating or deleting the information exposure service.

41. A communication apparatus, comprising: a fifth receiving unit configured to receive a sixth message sent by a second network function, wherein the sixth message is configured to notify a result of updating or deleting an information exposure service.

42. A communication apparatus, comprising: a sixth sending unit configured to send a seventh message to a second network function, wherein the seventh message is configured to request authorization to update or delete an information exposure service.

43. A computer-readable storage medium having a computer program stored thereon, wherein when the computer program is executed by a processor, the steps of the method of any one of claims 1-8 are implemented; or
when the computer program is executed by a processor, the steps of the method of any one of claims 9-13 are implemented; or
when the computer program is executed by a processor, the steps of the method of any one of claims 14-17 are implemented; or
when the computer program is executed by a processor, the steps of the method of any one of claims 18-24 are implemented; or
when the computer program is executed by a processor, the steps of the method of any one of claims 25-30 are implemented; or
when the computer program is executed by a processor, the steps of the method of any one of claims 31-36 are implemented.

44. A network function, comprising a memory, a processor and a computer program stored on the memory and executable by the processor, wherein when the computer program is executed by the processor, the steps of the method of any one of claims 1-8 are implemented; or
when the computer program is executed by the processor, the steps of the method of any one of claims 9-13 are implemented; or
when the computer program is executed by the processor, the steps of the method of any one of claims 14-17 are implemented; or
when the computer program is executed by the processor, the steps of the method of any one of claims 18-24 are implemented; or
when the computer program is executed by the processor, the steps of the method of any one of claims 25-30 are implemented; or
when the computer program is executed by the processor, the steps of the method of any one of claims 31-36 are implemented.
